(19)

**Europäisches Patentamt**
**European Patent Office**
**Office européen des brevets**

(11)  **EP 4 443 170 B1**

(12)  **EUROPEAN PATENT SPECIFICATION**

(45) Date of publication and mention
of the grant of the patent:
**29.04.2026  Bulletin 2026/18**

(51) International Patent Classification (IPC):
**G01Q 60/30** (2010.01)       **H01M 4/13** (2010.01)
**H01M 4/62** (2006.01)

(21) Application number: **23792213.3**

(22) Date of filing: **20.04.2023**

(52) Cooperative Patent Classification (CPC):
**H01M 4/139; G01Q 60/30; H01M 4/13; H01M 4/62;**
**H01M 4/624;** H01M 2004/021; Y02E 60/10

(86) International application number:
**PCT/KR2023/005397**

(87) International publication number:
**WO 2023/204639 (26.10.2023 Gazette 2023/43)**

(54) **METHOD FOR DETERMINING DISPERSIBILITY OF CONDUCTIVE MATERIAL IN ELECTRODE FOR ELECTROCHEMICAL DEVICE**

VERFAHREN ZUR BESTIMMUNG DER DISPERGIERBARKEIT EINES LEITFÄHIGEN MATERIALS IN EINER ELEKTRODE FÜR EINE ELEKTROCHEMISCHE VORRICHTUNG

PROCÉDÉ DE DÉTERMINATION DE LA DISPERSIBILITÉ D'UN MATÉRIAU CONDUCTEUR DANS UNE ÉLECTRODE POUR DISPOSITIF ÉLECTROCHIMIQUE

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority:  **20.04.2022  KR 20220049197**

(43) Date of publication of application:
**09.10.2024  Bulletin 2024/41**

(73) Proprietor: **LG Energy Solution, Ltd.**
**Seoul 07335 (KR)**

(72) Inventors:
• **YANG, Hyun-Jin**
**Daejeon 34122 (KR)**
• **LEE, Ki-Seok**
**Daejeon 34122 (KR)**

• **RAH, Kyun-Il**
**Daejeon 34122 (KR)**
• **SHIN, Dong-Oh**
**Daejeon 34122 (KR)**
• **CHOI, Byung-Hee**
**Daejeon 34122 (KR)**

(74) Representative: **Goddar, Heinz J.**
**Boehmert & Boehmert**
**Anwaltspartnerschaft mbB**
**Pettenkoferstrasse 22**
**80336 München (DE)**

(56) References cited:
JP-A- 2018 137 225       JP-A- 2018 523 281
JP-A- 2022 034 325       KR-A- 20130 064 288
KR-A- 20220 046 201     US-A1- 2020 075 937

**EP 4 443 170 B1**

**Description**

TECHNICAL FIELD

The present application claims priority to Korean Patent Application No. 10-2022-0049197 filed on April 20, 2022 in the Republic of Korea. The invention relates to a method for determining dispersibility, including a method for calculating the dispersibility index.

BACKGROUND

As attention to energy storage technology continues to increase, the spectrum of applications thereof has been expanded to cellular phones, tablet and laptop computers and camcorders, and even to energy for electric vehicles (EVs) and hybrid electric vehicles (HEVs), and the research and development of electrochemical devices has also been increased gradually. In this context, electrochemical devices have been most spotlighted, and particularly, a focus is on the development of rechargeable lithium-ion secondary batteries. Recently, research and development of designing novel electrodes and batteries have been conducted in order to improve the capacity density and specific energy in developing such batteries.

When manufacturing an electrode for such a secondary battery, a method for increasing the content of an active material in the electrode has been considered in order to improve the energy density. In this case, the content of a conductive material is relatively reduced, and thus it is important that the conductive material is distributed homogeneously in the electrode to prevent degradation of the electrical conductivity. The distribution of the conductive material in an electrode is highly related with the process for manufacturing the electrode. Therefore, there is a need for research and development of a method for manufacturing a dry electrode which can increase the dispersibility of the conductive material in manufacturing the electrode. In addition, there is a need for developing an evaluation tool capable of accurately determining the dispersibility of the conductive material in the electrode in establishing a process for manufacturing the electrode capable of improving the dispersibility of the conductive materia

In US 2020/0075937 A1 the aggregation of conductive particles in the electrode is measured from the image of a cross section of the electrode.

In KR 10-2022-0046201 A and in KR 10-2013-0064288 A the dispersivity of conductive material for an electrode is evaluated.

In JP 2002-34325 A, JP 2018-523281 A and JP 2018-137225 A the compositions of an electrode are disclosed.

The background description provided herein is for the purpose of generally presenting context of the disclosure.

DISCLOSURE

Technical Problem

The present disclosure is designed to solve among other things, the problems of the related art (exemplary examples given above), and therefore an object of the present disclosure is directed to providing a quantified dispersibility index capable of quantitatively representing the dispersibility of a conductive material in an electrode for an electrochemical device. The present disclosure is also directed to providing a method for determining dispersibility, including a method for calculating the dispersibility index. However, the technical problems to be solved by the present disclosure are not limited to the above-described problems, and these and other problems not mentioned herein may be clearly understood by those skilled in the art from the following description of the present disclosure. It will be easily understood that the objects and advantages of the present disclosure may be realized by the means shown in the appended claims.

Technical Solution

According to the claim 1 of the invention, there is provided a method for evaluating the dispersibility of a conductive material, in an electrode for an electrochemical device including an electrode active material layer containing an electrode active material and the conductive material, based on a mathematical formula defined by the parameters of the circumference (Boundary$_{measured}$) and area (A) of a portion defined as a conductive material zone in at least one predetermined cross-section inside of the electrode active material layer, wherein the mathematical formula is conductive material dispersibility index 1 (Index 1) represented by the following Formula 1 or conductive material dispersibility index 2 (Index 2) represented by the following Formula 2:

[Formula 1]

$$\text{Index 1 } (\mu m^{-1}) = \text{Boundary}_{measured}/A$$

[Formula 2]

$$\text{Index 2} = \text{Boundary}_{measured}/L_{circle}$$

wherein $\text{Boundary}_{measured}$ in Formula 1 represents the circumference of a portion determined in a predetermined cross-section of the electrode active material layer and defined as a conductive material zone, A in Formula 1 represents the area of a portion determined in a predetermined cross-section of the electrode active material layer and defined as a conductive material zone, and $L_{circle}$ in Formula 2 represents the circumference of a circle having the same area as the above-defined conductive material zone.

According to claim 1, the method for evaluating the dispersibility of a conductive material includes the steps of:

(Step 1) preparing a sample of cross-section in which a predetermined cross-section inside of the electrode active material layer is exposed;
(Step 2) acquiring a 2D-scale map about the resistance distribution of the sample of cross-section;
(Step 3) masking a conductive material zone; and
(Step 4) calculating the circumference and area of the masked zone, inputting the calculated values to Formula 1 and/or Formula 2, and determining the conductive material dispersibility of the electrode active material layer.

According to claim 2 of the invention, there is provided the method for evaluating the dispersibility of a conductive material as defined in claim 1, wherein the electrode active material layer is formed on any one surface of an electrode current collector, and the cross-section(s) is a surface parallel with or perpendicular to the portion where the electrode active material layer faces the current collector.

According to claim 3 of the invention, there is provided the method for evaluating the dispersibility of a conductive material as defined in claim 1, wherein the sample of cross-section is prepared by etching the electrode surface to a predetermined depth by ion milling.

According to claim 4 of the invention, there is provided the method for evaluating the dispersibility of a conductive material as defined in claim 1, wherein the step of acquiring a 2D-scale map about the resistance distribution of the sample of cross-section is carried out by scanning spreading resistance microscopy (SSRM) which includes scanning the surface of the sample of cross-section by using an atomic force microscopy (AFM) instrument.

According to claim 5 of the invention, there is provided the method for evaluating the dispersibility of a conductive material as defined in claim 1, wherein the step of masking a conductive material zone includes:

1) processing and modifying the resistance value data obtained from (Step 2) into a log scale to obtain a log-scale image (log(resistance) image);
2) extracting a log resistance distribution histogram in which the ingredients forming the sample of electrode cross-section are indicated in division from the log-scale image; and
3) taking a $\log(R/\Omega)$ value corresponding to the minimum value between the conductive material peak and the electrode active material peak in the histogram as a threshold, and masking a zone having a value smaller than the threshold as a conductive material zone.

According to claim 6 of the invention, there is provided the method for evaluating the dispersibility of a conductive material as defined in claim 5, which further includes a step of correcting the threshold by adding a value of 0.1-0.5 to the minimum value.

According to claim 7 of the invention, there is provided the method for evaluating the dispersibility of a conductive material as defined in claim 1, wherein the electrode includes a current collector and an electrode active material layer formed on at least one surface of the current collector, and the electrode active material layer includes an electrode active material, a conductive material and a binder.

According to claim 8 of the invention, there is provided the method for evaluating the dispersibility of a conductive material as defined in claim wherein the cross-section is parallel with or perpendicular to the portion where the electrode active material layer faces the current collector.

Advantageous Effects

The method for evaluating the dispersibility of a conductive material according to the present disclosure allows determination of the dispersibility of a conductive material in an electrode as a quantitative value. Particularly, a conductive material zone is defined from the result (2D mapping image) obtained by subjecting an optional predetermined cross-section of electrode active material layer to 2D-scale visual image processing, and then the circumference and area of the portion defined as the conductive material zone are calculated. In this manner, the dispersibility of the conductive material can be represented quantitatively.

DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing. Meanwhile, shapes, sizes, scales, or proportions of some constitutional elements in the drawings may be exaggerated for the purpose of clearer description.

FIG. 1a illustrates a scanning spreading resistance microscopic (SSRM) image of the electrode according to Example 4 obtained through SSRM, and FIG. 1b is an image determined by masking the conductive material zone thereof.

FIG. 2 is a graph of log (resistance distribution) histogram of Example 4.

FIG. 3 is an SSRM image of Example 1, and FIG. 4 is an image determined by masking the conductive material zone thereof.

FIG. 5 is an SSRM image of Example 2, and FIG. 6 is an image determined by masking the conductive material zone thereof.

FIG. 7 is an SSRM image of Example 3, and FIG. 8 is an image determined by masking the conductive material zone thereof.

FIG. 9a and FIG. 9b are schematic views illustrating a method for preparing a sample of electrode cross-section.

FIG. 10 is an image resulting from the masking of the conductive material zone of FIG. 1 with no correction in the histogram obtained from the electrode according to Example 4, and FIG. 11 is an image resulting from the masking of the conductive material zone of FIG. 1 after correction in the electrode according to Example 4.

FIG. 12 is an exemplary graph illustrating a portion where the graph of a conductive material and the graph of an active material are overlapped in the histogram.

FIG. 13 and FIG. 14 illustrate the SSRM images of the electrodes according to Examples 5 and 6, and images resulting from the masking of the conductive material zones of the electrodes according to Examples 5 and 6 after correction, respectively.

FIG. 15 illustrates a display screen showing the area and circumference of a conductive material zone calculated by using Gwyddion software.

BEST MODE

Hereinafter, embodiments of the present disclosure will be described in detail with reference to the accompanying drawings.

Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

The terminology used herein is for the purpose of describing particular embodiments only and is not intended to be limiting of the present disclosure. As used herein, the singular forms 'a', 'an' and 'the' are intended to include the plural forms as well, unless the context clearly indicates otherwise.

Throughout the specification, the expression 'a part includes or comprises an element' does not preclude the presence of any additional elements but means that the part may further include the other elements, unless otherwise stated.

As used herein, the terms 'about', 'substantially', or the like, are used as meaning contiguous from or to the stated numerical value, when an acceptable preparation and material error unique to the stated meaning is suggested, and are used for the purpose of preventing an unconscientious invader from unduly using the stated disclosure including an accurate or absolute numerical value provided to help understanding of the present disclosure.

As used herein, the expression 'A and/or B' means 'A, B, or both of them'.

## Conductive Material Dispersibility

The present disclosure suggests a method for defining a conductive material zone from the result (2D mapping image) obtained through the 2D scale visual image processing of a predetermined cross-section of an electrode active material layer, a method for calculating the circumference and area of the portion defined as the conductive material zone, and a dispersibility index capable of quantitively representing the dispersibility of a conductive material based on the same methods.

According to the present disclosure, the dispersibility index is represented by conductive material dispersibility index 1 (Index 1) of at least one predetermined cross-section inside of the electrode active material layer according to the following Formula 1. Meanwhile, independently from Index 1, the dispersibility index is represented by conductive material dispersibility index 2 (Index 2) according to the following Formula 2. The above-mentioned conductive material dispersibility index 1 and dispersibility index 2 are values calculated from the parameters of the circumference ($Boundary_{measured}$) and area (A) of a portion determined from the cross-section and defined as a conductive material zone.

[Formula 1]

$$\text{Index 1 } (a^{-1}) = Boundary_{measured}/A$$

wherein $Boundary_{measured}$ represents the circumference of a portion determined in a predetermined cross-section of the electrode active material layer and defined as a conductive material zone, and A represents the area of a portion determined in a predetermined cross-section of the electrode active material layer and defined as a conductive material zone. In addition, 'a' in Formula 1 is the unit used herein. When the unit of the circumference is $\mu m$, the unit of Index 1 is $\mu m^{-1}$.

[Formula 2]

$$\text{Index 2} = Boundary_{measured}/L_{circle}$$

wherein $Boundary_{measured}$ is the same as defined in Formula 1, and $L_{circle}$ represents the circumference of a circle having the same area as the above-defined conductive material zone. In an optional closed curve, the closed curve having the smallest circumference is a circle. Therefore, when an imaginary circle having the same area as the total area (A) of the conductive material zone is assumed, the circumferential length of the circle is calculated, and the circumference of an actual conductive material zone is divided by the circumference of the imaginary circle to obtain a value of Index 2, it can be understood that a higher value suggests a higher dispersibility.

Herein, $L_{circle}$ is calculated based on the following Mathematical Formula 1 and Mathematical Formula 2:

[Mathematical Formula 1]

$$r\,(\text{ radius of circle }) = \sqrt{\frac{A}{\pi}}$$

[Mathematical Formula 2]

$$L_{circle} = (2 \times \sqrt{\pi A})$$

Therefore, the above Formula 2 may be expressed by the following Formula 2A:

[Formula 2A]

$$\text{Index 2} = Boundary_{measured}/(2 \times \sqrt{\pi A})$$

In other words, the area of a circle is calculated according to the formula of $\{(\text{radius of circle } (r))^2 \times \pi\}$, and thus the radius (r) of the imaginary circle can be calculated therefrom, and the circumference ($2\pi r$) can be calculated, once the radius is obtained.

Herein, higher values of dispersibility index 1 and dispersibility index 2 mean that the conductive material is not aggregated and localized but is dispersed homogeneously in the electrode active material layer.

According to the present disclosure, the cross-section(s) may be formed in parallel with the portion where the electrode active material layer faces the current collector. In other variations, the cross-section(s) may be formed in parallel with or perpendicular to the portion where the electrode active material layer faces the current collector, or may be formed at a predetermined angle to the portion. Since the present disclosure is intended to determine the dispersibility of a conductive material in the electrode active material layer, the angle between the exposed surface and the portion facing the current collector is not limited to any specific range, as long as the internal part of the electrode active material layer may be exposed to such a degree that Index 1 and Index 2 may be determined.

Index 1 and Index 2 are determined by visualizing the distribution of electrode materials, particularly, a conductive material, for a predetermined cross-section of electrode active material layer, calculating the circumference and area of the portion (conductive material zone) in which the conductive material is distributed, and inputting the calculated values to the above formulae. Determination of the distribution of the electrode materials contained in the electrode active material layer is in a microscopic dimension of micro-scale or lower. Therefore, the visualization of the distribution of the conductive material may be carried out by using an electronic visualizing device, such as atomic force microscopy and scanning spreading resistance microscopy, as described hereinafter.

Then, the method for calculating Index 1 and Index 2 will be explained in detail.

The method includes the steps of:

(Step 1) preparing a sample of electrode cross-section by allowing a predetermined cross-section inside of an electrode for an electrochemical device to be exposed;

(Step 2) acquiring resistance value data of the electrode active material and conductive material of the sample of cross-section by using scanning spreading resistance microscopy;

(Step 3) acquiring a log scale image and histogram of the resistance value data; and

(Step 4) calculating Index 1 and/or Index 2.

Hereinafter, each step of the method will be explained in more detail.

## (Step 1)

First, a sample of electrode cross-section is prepared by allowing a predetermined cross-section inside of an electrode for an electrochemical device to be exposed. The electrode may include an electrode active material layer formed on at least one surface of a current collector, wherein the electrode active material layer may include an electrode active material, a conductive material, and a binder resin. Next, the surface of the electrode active material layer is removed to a predetermined thickness by using ion beams of ion milling to expose the cross-section inside of the electrode active material layer. The ion milling refers to a method for etching a material by accelerating inert gas ions toward the surface of a vacuum-state sample from a broad beam ion source. The ion milling is based on a sputtering phenomenon in which inert gas (e.g., argon) ions or atoms are accelerated with a suitable level of voltage so that the atoms of the sample surface may be separated off. In this manner, a sample of electrode cross-section having a clear cross-section with no physical damage may be prepared, and a conductive material zone may be seen more clearly in the electrode.

According to an embodiment of the present disclosure, the inert gas may be argon. When argon ion beams are irradiated to the electrode for a secondary battery, it is possible to prepare the sample of electrode cross-section more stably.

According to an embodiment of the present disclosure, the ion beam current of the ion milling system may be 100-250 $\mu$A. Particularly, the ion beam current of the ion milling system may be 110-150 $\mu$A or 200-230 $\mu$A. When controlling the ion beam current of the ion beam milling system to the above-defined range, it is possible to reduce the time required for preparing the sample of electrode cross-section, to prevent redeposition of electrode materials on the sample cross-section, and thus to obtain a sample of electrode cross-section having a clearer cross-section.

Because of the excellent results obtained from the ion milling in terms of roughness, information about the electrode surface may be obtained, and the sample may be observed through an electronic microscope, and desired information, such as visualized data, may be obtained.

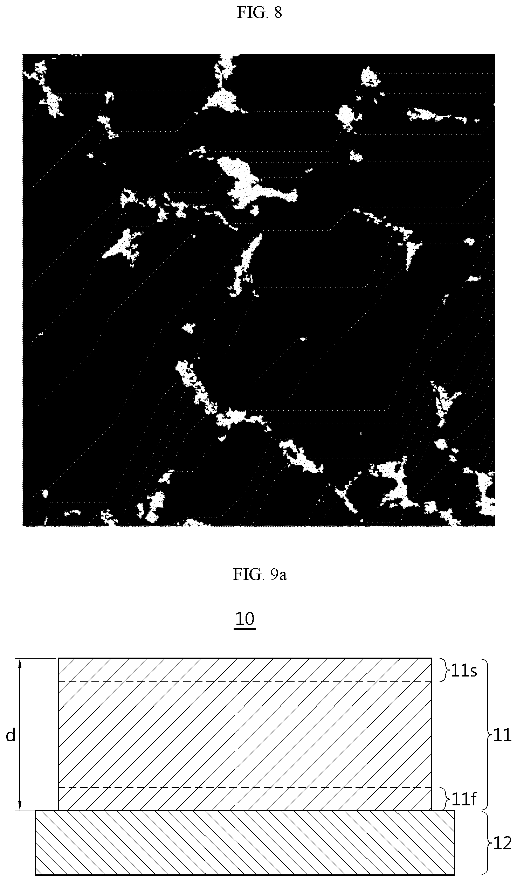

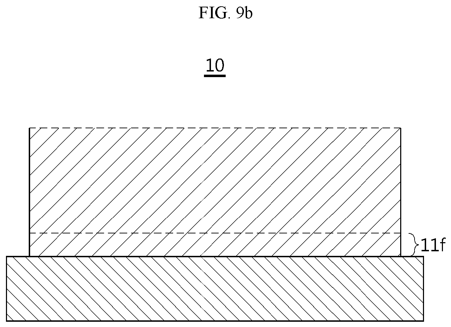

FIG. 9a and FIG. 9b are schematic views illustrating the method for preparing a sample of electrode cross-section. Referring to FIG. 9a and FIG. 9b, the sample of cross-section is obtained by etching and removing a portion 11s to a predetermined depth from the surface of the electrode active material layer based on the thickness direction (height) of the electrode active material layer through ion milling, thereby exposing a predetermined plane inside of the electrode active material layer (FIG. 9b).

Meanwhile, according to an embodiment of the present disclosure, the step of preparing a sample of electrode cross-section may further include a step of filling the internal pores of the electrode for a secondary battery with an epoxy group-containing polymer by impregnating the electrode with the epoxy group-containing polymer. The method for impregnating the electrode with the epoxy group-containing polymer may be carried out in a conventional manner known to those skilled in the art. For example, the epoxy group-containing polymer may be applied onto the electrode, or the electrode may be dipped in a polymer solution including the epoxy group-containing polymer so that the electrode may be impregnated with the solution.

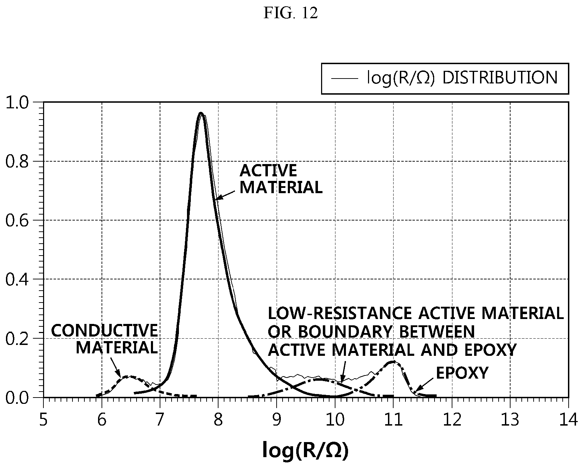

According to an embodiment of the present disclosure, the method for analyzing the electrode for a battery may further include a step of measuring the resistance value of the epoxy group-containing polymer filled in the pores of the sample of electrode cross-section. The resistance value of the pores in the sample of electrode cross-section may be obtained by using scanning spreading resistance microscopy by filling the internal pores of the electrode for a secondary battery with the epoxy group-containing polymer. The resistance value of the polymer material with which the pores are filled may be measured to obtain resistance value data. From this, it is possible to determine the zone where the pores are located, and to differentiate the electrode active material zone, the conductive material zone, and the pore zone of the sample of electrode cross-section more clearly from a combined image (see, FIG. 12).

According to an embodiment of the present disclosure, the epoxy group-containing polymer may include an epoxy resin polymer including a cyclic structure in its molecule, particularly, an epoxy resin polymer containing an aromatic group (*e.g.,* phenyl group). Particular examples of the epoxy group-containing polymer having an aromatic group include, but are not limited to: any one selected from biphenyl-type epoxy group-containing polymer, dicyclopentadiene-type epoxy group-containing polymer, naphthalene-type epoxy group-containing polymer, dicyclopentadiene-modified phenol-type epoxy group-containing polymer, cresol-based epoxy group-containing polymer, bisphenol-based epoxy group-containing polymer, xylol-based epoxy group-containing polymer, multifunctional epoxy group-containing polymer, phenol novolak epoxy group-containing polymer, triphenolmethane-type epoxy group-containing polymer and alkyl-modified triphenolmethane epoxy group-containing polymer, or a mixture of two or more of them. More particularly, the epoxy group-containing polymer having an aromatic group may include any one selected from epoxyethane (ethylene oxide), 1,3-epoxypropane (trimethylene oxide) and bisphenol-A-epichlorohydrin, but is not limited thereto.

## (Step 2)

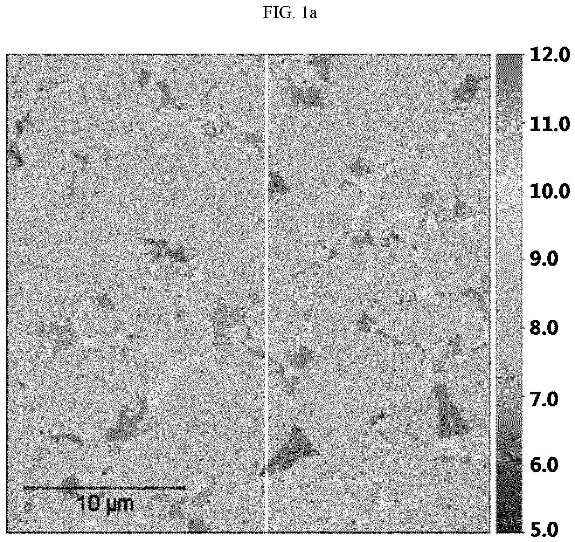

Next, a 2D-scale map about the resistance distribution of the sample of cross-section is obtained by using conduction network analysis (scanning spreading resistance microscopy), once the sample of electrode cross-section is prepared in Step 1. FIG. 1a illustrates an example of the 2D-scale map of Example 4 obtained by the above-mentioned method.

For example, atomic force microscopy (AFM) is used to scan the surface of the sample of cross-section to obtain an image converted into a 2D-scale. In this manner, a map in which the height of the electrical resistance value is expressed by light and shade of color is obtained, and the distribution of surface resistance can be seen visually through the difference in color tone (light and shade).

First, a sample used for analysis in an atomic force microscopy (AFM) system is prepared. The sample of cross-section prepared by the above-described procedure is attached to a metal disc for AFM in such a manner that the cross-section faces upward, and silver paste is applied in such a manner that a conduction path may be formed in the portion other than the milled cross-section and the metal disc for AFM. The prepared sample for AFM analysis is loaded to the system and laser aligned, and the cross-section is selected as a test portion with an optical microscope. Then, the electrode cross-section is allowed to be in contact with an atomic microscope probe, and current flowing through the sample between the atomic microscope probe and the contact electrode is measured to obtain spreading resistance from the measured current.

According to an embodiment of the present disclosure, the driving conditions of the scanning spreading resistance microscope for analyzing the sample of electrode cross-section may be exemplified as follows.

The AFM system is not particularly limited, as long as it allows visual imaging of the resistance distribution according to the scanning spreading resistance microscopy. For example, Cypher ES (available from Oxford Instrument) may be used. According to a particular embodiment of the present disclosure, Dual-gain ORCA may be used as a cantilever holder, and AR (available from Oxford Instrument) may be used as a driving software.

Particular driving conditions may include setting Contact Mode, setting the pixel of an image to be acquired to 512x512 to 1024x1024, setting the scanning rate to 0.2-1.0 Hz, setting the bias to 2.0 V or less, and setting the set point to 1.0 V or less. For example, the image pixel may be set to 512x512, the scan rate may be set to 0.5 Hz, the bias may be set to 2.0 V or less, and the set point may be set to 0.2 V. As an AFM probe, Solid diamond ABF probes (AD-40-As, available from Adama) made of boron-doped single crystal diamond may be used.

Meanwhile, according to an embodiment of the present disclosure, the sample of cross-section is preferably subjected to AFM, for example, in a glove box, while not being exposed to the atmosphere. Herein, the sample of cross-section may be loaded to a cell body to maintain the state not exposed to the atmosphere.

(Step 3)

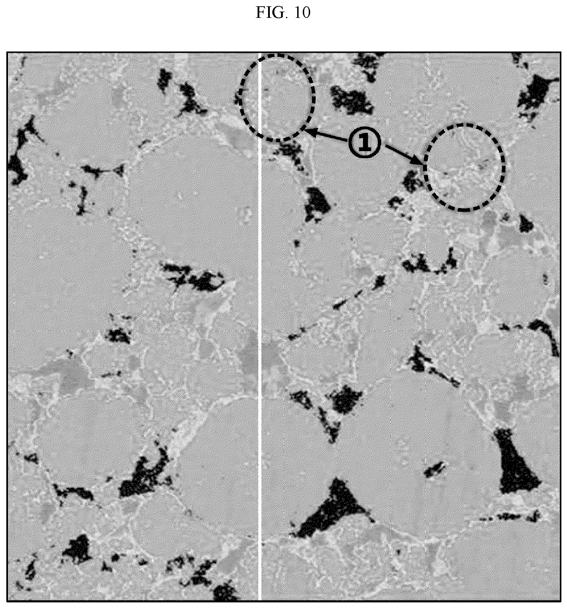

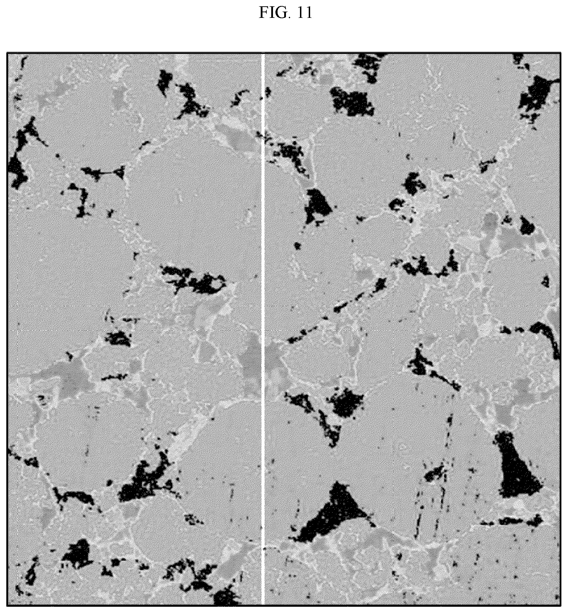

Once the 2D-scale map is obtained through Step 2, a conductive material zone is defined. Herein, the term 'defined' is also expressed as 'masked', since a visual indication method is used. For example, FIG. 10 and FIG. 11 illustrate the electrode according to Example 4, wherein the conductive material zone determined from the histogram is masked with a black color. The method for defining the conductive material zone will be explained in more detail hereinafter.

First, the resistance value data obtained by using scanning spreading resistance microscopy may be processed and modified into a log scale to obtain a log-scale image (log (resistance) image). Once such a log-scale image is obtained, [log resistance distribution histogram] in which the ingredients forming the sample of electrode cross-section are indicated in division is extracted therefrom.

Each pixel on the histogram can determine whether the zone corresponding to the pixel is an electrode active material zone, a pore or binder zone, or a conductive material zone, and the information of each pixel determined in terms of the zone corresponding thereto may be used to quantify the distribution of conductive material zone in the 2D mapping image.

A $\log(R/\Omega)$ value corresponding to the minimum value between the conductive material peak and the electrode active material peak in the histogram is taken as a threshold, and a zone having a value smaller than the threshold is masked as a conductive material zone. Herein, in order to ensure more accurate information about the conductive material zone, the value may be corrected by adding/subtracting a value of 0.1-0.5 to/from the minimum value.

According to an embodiment of the present disclosure, the correction may be adding a value of 0.1-0.5 to the $\log(R/\Omega)$ value corresponding to the minimum value. This is for the purpose of correcting the portion not indicated as the conductive material zone due to the overlap of the active material zone with the conductive material zone. For example, the corrected value may be obtained, for example, by dividing the histogram into the left side and the right side with the conductive material zone peak taken as a center, and correcting the bottom point of the right-side zone so that it may have the same value as the horizontal distance to the left-side bottom point at the peak.

When such correction is carried out, even the portion not indicated as the conductive material zone due to the overlap of the active material zone with the conductive material zone can be indicated as the conductive material zone, and thus more accurate dispersibility data can be ensured.

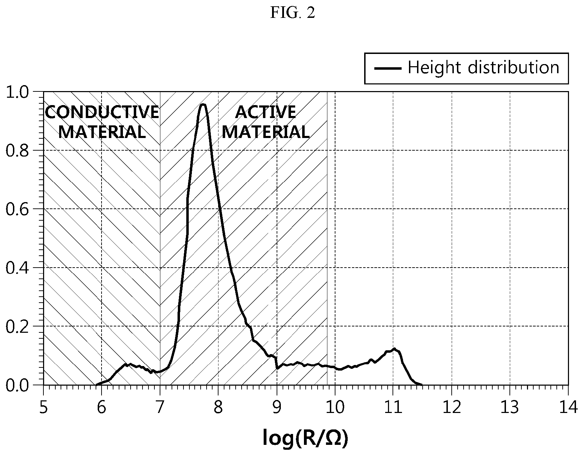

FIG. 2 illustrates [log (resistance) distribution histogram] of the electrode according to Example 4, extracted based on the log scale image (log (resistance) image). Referring to FIG. 2, the conductive material peak and the electrode active material peak can be determined, and the minimum value between both peaks may be specified. However, as described above, since a non-indicated conductive material zone caused by the overlap with the active material zone is present in the zone beyond the minimum value, the value is corrected as described above. FIG. 12 shows an exemplary predicted embodiment of the conductive material zone overlapped with the active material.

Meanwhile, FIG. 10 illustrates the conductive material zone masked in an SSRM image based on the value before correction. The masking of the conductive material zone is performed with a color not shown in the original image, and in this embodiment, the conductive material zone is masked with a black color. In FIG. 10, the portion corresponding to the conductive material but remaining in a non-masked state can be seen from the circular portion marked by a dotted line. The non-masked portion is determined as a portion maintaining a blue color, when the color is checked. Meanwhile, FIG. 11 illustrates the conductive material zone masked based on the value after correction. Herein, it can be seen from FIG. 11 that the portion not masked in FIG. 10 (portion maintaining a blue color) is masked with a black color.

Meanwhile, the zone positioned in the active material in the zone masked as a conductive material is deleted to eliminate an error. This is an error generated during a process for preparing a sample, for example, due to the contamination of the active material cross-section exposed during the cross-section sample preparation step with the conductive material, or an error generated during the imaging processing, and it is obvious that the conductive material is not distributed inside of the active material in an actual electrode. Therefore, such errors are removed preferably.

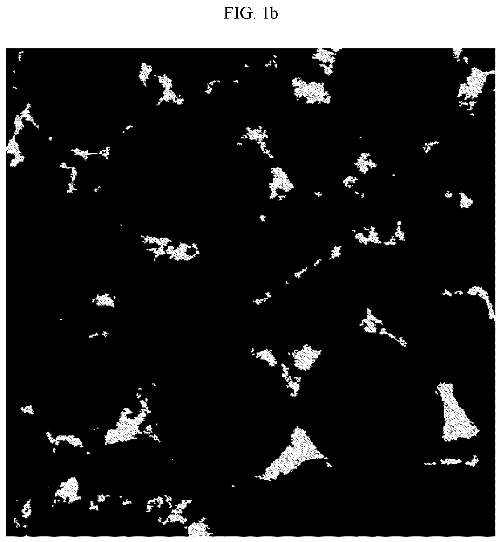

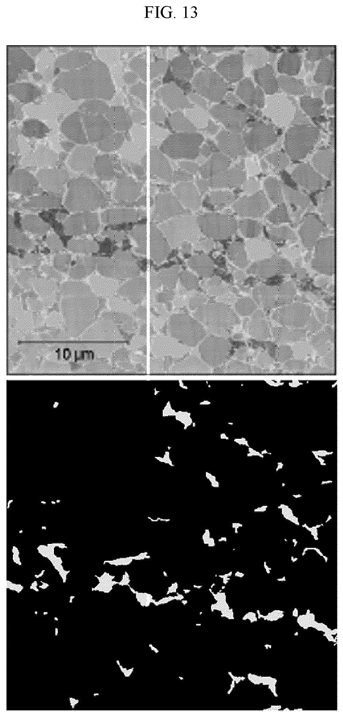

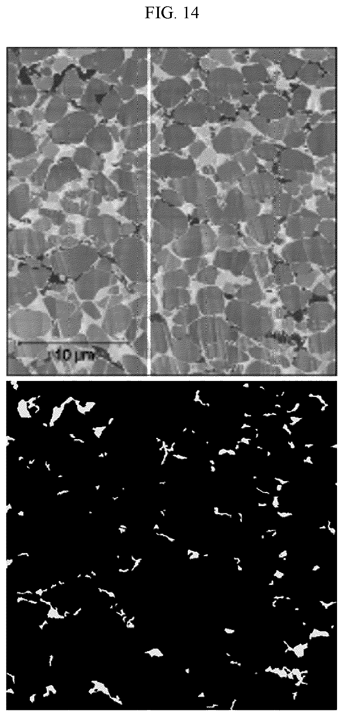

Meanwhile, after masking the conductive material zone, an image in which only the conductive material zone is indicated is extracted (contrast masking) as shown in FIG. 1b, FIG. 4, FIG. 6, FIG. 8, the bottom of FIG. 13 and the bottom of FIG. 14, and is provided to the calculation of Step 4.

According to an embodiment of the present disclosure, the conductive material zone may be masked by using a program which carries out visual processing of data obtained through scanning probe microscopy, such as AFM. According to an embodiment of the present disclosure, the masking may be carried out by using Gwyddion software. Meanwhile, when a lot of images having an excessively small pixel size is present in the images, it is difficult to accurately determine the circumference or area of the conductive material zone, and such images may function as noise in calculating dispersibility, thereby causing an error. Therefore, such excessively small pixel images may be removed, while the masking is carried out. For example, when using Gwyddion program, the grain-filtering function may be used to delete small zones of less than 3 pixel so that they may not be masked as conductive material zones. When such fine zones of less than 3 pixel are included, the circumference of the conductive material zone may be calculated into an excessively high value. Therefore, the fine zones are removed before determination. Meanwhile, FIG. 2 illustrates a histogram obtained by the above-described method, and it can be seen that the active material zone is differentiated from the conductive material zone.

**(Step 4)**

When the masking of the conductive material zone is completed in (Step 3) (*i.e.,* the conductive material zone is defined), the circumference and area of the masked zone are determined, and Index 1 is calculated therefrom according to Formula 1. In Formula 1, the circumference of the masked zone is applied to Boundary$_{measured}$, and the area of the masked zone is applied to A.

In addition, the radius of a circle having the same area as the masked zone is calculated, and the circumference of the circle can be calculated therefrom. The circumference of the circle is input to $L_{circle}$ to calculate Index according to Formula 2.

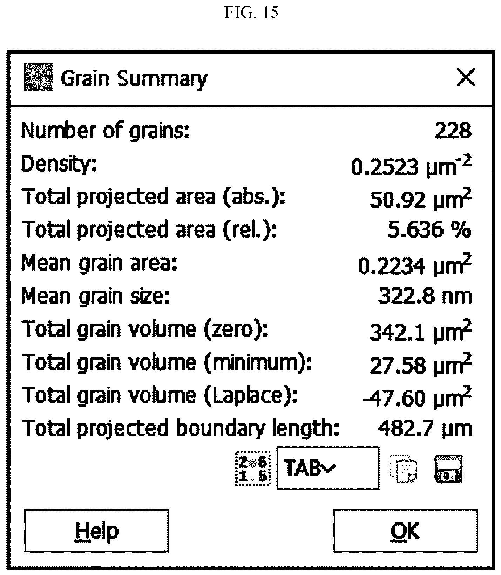

Meanwhile, according to the present disclosure, the area and circumference of the masked conductive material zone may be calculated by using an image processing program, such as Gwyddion software. FIG. 15 illustrates a display screen showing the area and circumference calculated through the program.

**Electrode for Electrochemical Device**

According to the present disclosure, the electrode to be evaluated in terms of conductive material dispersibility is not particularly limited, as long as it is an electrode for an electrochemical device. The electrochemical device may include any device which performs electrochemical reactions. Particular examples of the electrochemical device include all types of primary batteries, secondary batteries, fuel cells, solar cells, capacitors, such as super-capacitor devices, or the like. The secondary battery may be a lithium-ion secondary battery using a lithium salt as an ion conductive salt. According to an embodiment of the present disclosure, the electrode may include a current collector and an electrode active material layer disposed on at least one surface of the current collector. In addition, the electrode active material layer may include an electrode active material, a conductive material and a binder ingredient.

**Electrode Active Material**

The electrode active material layer may include a positive electrode active material or a negative electrode active material, depending on the polarity of the electrode.

Non-limiting examples of the positive electrode active material are not particularly limited, as long as they are lithium transition metal oxides or lithium metal iron phosphates, metal oxides, or the like, and particular examples thereof include, but are not limited to: layered compounds, such as lithium cobalt oxide ($LiCoO_2$) and lithium nickel oxide($LiNiO_2$), or those compounds substituted with one or more transition metals; lithium manganese oxides, such as $Li_{1+x}Mn_{2-x}O_4$ (wherein x is 0-0.33), $LiMnO_3$, $LiMn_2O_3$ and $LiMnO_2$; lithium copper oxide ($Li_2CuO_2$); vanadium oxides, such as $LiV_3O_8$, $LiV_3O_4$, $V_2O_5$ or $Cu_2V_2O_7$; Ni site-type lithium nickel oxides represented by the chemical formula of $LiNi_{1-x}M_xO_2$ (wherein M is Co, Mn, Al, Cu, Fe, Mg, B or Ga, and x is 0.01-0.3); lithium manganese composite oxides represented by the chemical formula of $LiMn_{2-x}M_xO_2$ (wherein M is Co, Ni, Fe, Cr, Zn or Ta, and x is 0.01-0.1) or $Li_2Mn_3MO_8$ (wherein M is Fe, Co, Ni, Cu or Zn); $LiMn_2O_4$ in which Li is partially substituted with an alkaline earth metal ion; lithium metal phosphates $LiMPO_4$ (wherein M is Fe, Co, Ni or Mn); lithium nickel-manganese-cobalt oxides $Li_{1+x}(Ni_aCo_bMn_c)_{1-x}O_2$ (x is 0-0.03, a is 0.3-0.95, b is 0.01-0.35, c is 0.01-0.5, a + b + c = 1); lithium nickel-manganese-cobalt oxides partially substituted with aluminum $Li_{1+x}(Ni_aCo_bMn_cAl_d)_{1-x}O_2$ (x is 0-0.03, a is 0.3-0.95, b is 0.01-0.35, c is 0.01-0.5, d is 0.001-0.03, a + b + c + d = 1); lithium nickel-manganese-cobalt oxides partially substituted with another transition metal $Li_{1+x}(Ni_aCo_bMn_cM_d)_{1-x}O_2$ (x is 0-0.03, a is 0.3-0.95, b is 0.01-0.35, c is 0.01-0.5, d is 0.001-0.03, a + b + c + d = 1, M is any one selected from the group consisting of Fe, V, Cr, Ti, W, Ta, Mg and Mo); disulfide compounds; $Fe_2(MoO_4)_3$; or the like.

Non-limiting examples of the negative electrode active material include: carbon, such as non-graphitizable carbon or graphite-based carbon; metal composite oxides, such as $Li_xFe_2O_3$ ($0 \leq x \leq 1$), $Li_xWO_2$ ($0 \leq x \leq 1$) and $Sn_xMe_{1-x}Me'_yO_z$ (Me: Mn, Fe, Pb, Ge; Me': Al, B, P, Si, elements of Group 1, 2 or 3 in the Periodic Table, halogen; $0 < x \leq 1$; $1 \leq y \leq 3$; $1 \leq z \leq 8$); lithium metal; lithium alloy; silicon-based alloy; tin-based alloy; silicon-based oxides, such as SiO, SiO/C and $SiO_2$; metal oxides, such as SnO, $SnO_2$, PbO, $PbO_2$, $Pb_2O_3$, $Pb_3O_4$, $Sb_2O_3$, $Sb_2O_4$, $Sb_2O_5$, GeO, $GeO_2$, $Bi_2O_3$, $Bi_2O_4$ and $Bi_2O_5$; and conductive polymers, such as polyacetylene; Li-Co-Ni-based materials, or the like.

## Binder Ingredient

According to the present disclosure, the binder ingredient is not particularly limited, as long as it accomplishes the binding of the ingredients, such as the electrode active material, contained in the electrode and the binding with a separator or current collector facing the electrode active material and may be used as a binder ingredient for a secondary battery.

## Conductive Material

The conductive material may be contained in the mixed powder for an electrode and introduced to the electrode active material layer. The conductive material is not particularly limited, as long as it has conductivity, while not causing any chemical change in the corresponding battery. Particular examples of the conductive material include: graphite, such as natural graphite or artificial graphite; carbon black, such as acetylene black, ketjen black, channel black, furnace black, lamp black or thermal black; conductive fibers, such as carbon fibers or metal fibers; fluorocarbon; metal powder, such as aluminum or nickel powder; conductive whisker, such as zinc oxide or potassium titanate; conductive metal oxide, such as titanium dioxide; conductive material such as a polyphenylene derivative; or the like. Particularly, with a view to homogeneous mixing of the conductive material and improvement of the conductivity, the conductive material may include at least one selected from the group consisting of activated carbon, graphite, carbon black and carbon nanotubes, more particularly, activated carbon.

## Current Collector

Meanwhile, according to an embodiment of the present disclosure, the current collector is not particularly limited, as long as it has high conductivity, while not causing any chemical change in the corresponding battery. Particular examples of the current collector include stainless steel, aluminum, nickel, titanium, baked carbon, copper, aluminum or stainless steel surface-treated with carbon, nickel, titanium, silver, etc., aluminum-cadmium alloy, or the like. In addition, fine surface irregularities may be formed on the surface of the current collector to enhance the binding force of the electrode active material. Further, the current collector may have various shapes, such as a film, a sheet, a foil, a net, a porous body, a foam or non-woven web body, or the like.

Meanwhile, according to an embodiment of the present disclosure, the current collector may be totally or partially coated with a conductive primer for reducing the surface resistance and improving the adhesion. Herein, the conductive primer may include a conductive material and a binder, wherein the conductive material is not particularly limited, as long as it has conductivity. For example, the conductive material may be a carbonaceous material. The binder may include a fluorine-based binder (including PVDF and PVDF copolymer), acryl-based binder and an aqueous binder that can be dissolved in a solvent, or the like.

Meanwhile, according to the present disclosure, the method for manufacturing an electrode is not particularly limited. For example, a wet process of applying a slurry for forming an electrode active material layer to a current collector, or a dry process of compressing and molding electrode mixture particles into a layered structure may be used to obtain an electrode.

The method for manufacturing an electrode through a wet process may be exemplified as follows. First, electrode materials, such as an electrode active material, a conductive material and a binder, are introduced to a suitable solvent to prepare a slurry for forming an electrode active material layer. The slurry may further include an additive capable of improving the electrochemical performance or slurry dispersibility, besides the above-listed electrode materials. Then, the slurry is applied to an electrode current collector. The slurry may be applied through a known application method, such as slot die coating, gravure coating, dip coating, blade coating, or the like, with no particular limitation. After that, the solvent is removed to obtain an electrode having an electrode active material layer disposed on the surface of the current collector. The slurry may be dried through a natural drying or air blowing drying process, and may be heated with a view to acceleration of drying. Then, a pressurization process may be further carried out to ensure a suitable thickness or electrode active material loading amount.

The dry process may include preparing a dry mixture containing electrode materials or mixed particles containing electrode materials, and compressing the powdery materials with no introduction of a solvent to carry out molding into a layered structure.

The dry manufacturing process according to an embodiment of the present disclosure will be explained hereinafter. First, powdery electrode materials are mixed in a dry state. Herein, the electrode materials may include an electrode active material, a binder and a conductive material. The mixed particles may further include an additive capable of improving the electrochemical performance or particle formation, besides the above-listed electrode materials. Then, shear force is applied to the resultant mixture to fibrilize the binder. The shear force may be applied by mixing the electrode materials at a high speed or through a kneading process. Herein, in the case of the kneading, a lower level of shear force may be applied, as compared to the mixing. According to an embodiment of the present disclosure, the kneading process may be carried out at a high temperature, such as 80°C or higher, or 100°C or higher. Meanwhile, the temperature may be controlled to 200°C or lower, preferably 150°C or lower. Through such a process, the binder resin is fibrilized and the electrode materials are entangled with one another to provide mixed particles having a predetermined size. Meanwhile, blend clumps are obtained through the kneading process, and a pulverization process may be further carried out in order to obtain mixed particles having a predetermined size. The mixed particles may include a binder resin capable of fibrilization under shear force, for example, polytetrafluoroethylene (PTFE) or polyolefin. Once the mixed particles are obtained in the above-described manner, the mixed particles may be pressurized to obtain a sheet-like electrode film, and the electrode film may be bound with a current collector to obtain an electrode. In another variation, the mixed particles may be applied directly to a current collector, followed by pressurization. Meanwhile, in the method for preparing the mixed particles, the electrode materials may be introduced to a solvent to prepare a slurry, and the slurry may be spray dried to obtain mixed particles. In this case, a binder resin, such as Styrene-Butadiene Rubber (SBR), may be used. However, according to the present disclosure, the electrode used for determination of conductive material dispersibility is not limited to any particular shape or manufacturing process, and any electrode may be used, as long as the above-described method for determining dispersibility may be applied thereto.

<u>MODE FOR DISCLOSURE</u>

The present disclosure will be described more fully hereinafter with reference to Examples, Comparative Examples, and Test Examples so that the present disclosure can be understood with ease by those skilled in the art.

**[Examples]**

**Manufacture of Electrode**

**Example 1**

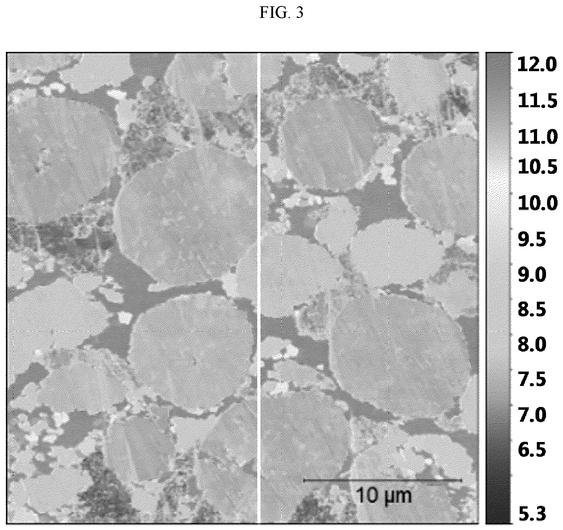

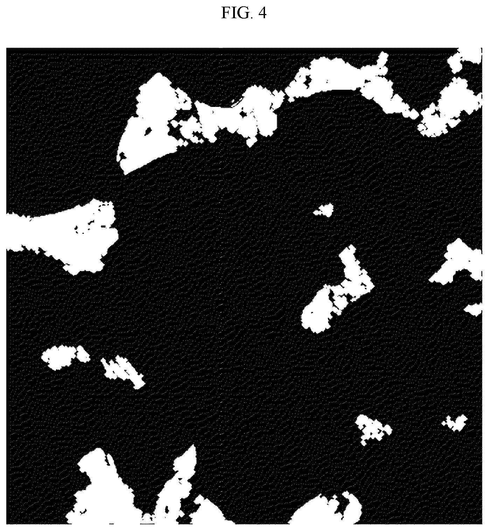

First, lithium nickel cobalt manganese aluminum composite oxide (Li(Ni, Co, Mn, Al)$O_2$), carbon black (specific surface area 1400 m$^2$/g) and polytetrafluoroethylene (PTFE) were introduced to a blender at a ratio of 96.0: 1.5:2.5 and mixed therein at 10,000 rpm for 1 minute to prepare a mixture. Next, the resultant mixture was pulverized through a jet-milling process (feeding pressure 50 psi, grinding pressure 45 psi) to obtain a mixed powder for an electrode. The mixed powder for an electrode was introduced to a first lab calender (roll diameter: 88 mm, roll temperature: 100°C, 20 rpm) to carry out compression, thereby providing a dry electrode film. Then, the resultant dry electrode film was disposed on both surfaces of aluminum foil (thickness 19 $\mu$m) and laminated through a lamination process while maintaining the temperature at 150°C to obtain an electrode. The electrode active material layer on one surface of the resultant electrode had a thickness of about 80 $\mu$m. Meanwhile, the lithium nickel cobalt manganese aluminum composite oxide has a bimodal distribution and includes discrete particles having a diameter of larger particles (secondary particles) about 10 $\mu$m and a diameter of smaller particles of about 5 $\mu$m. FIG. 3 illustrates the SSRM image of Example 1, and FIG. 4 illustrates the image observed after masking the conductive material zone thereof.

**Examples 2-4**

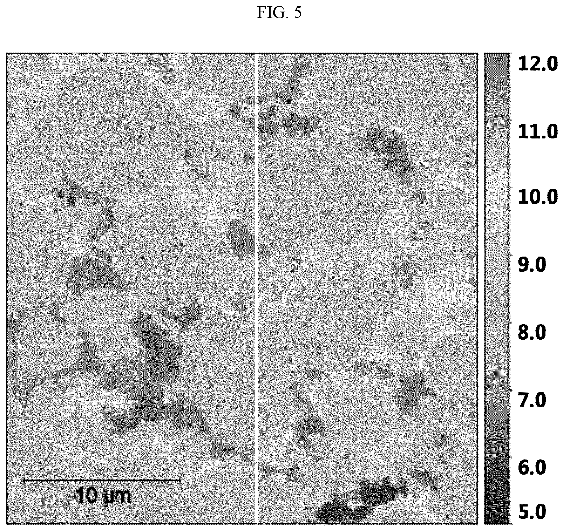

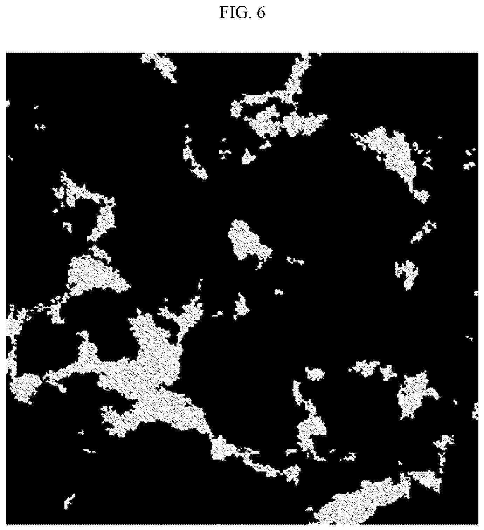

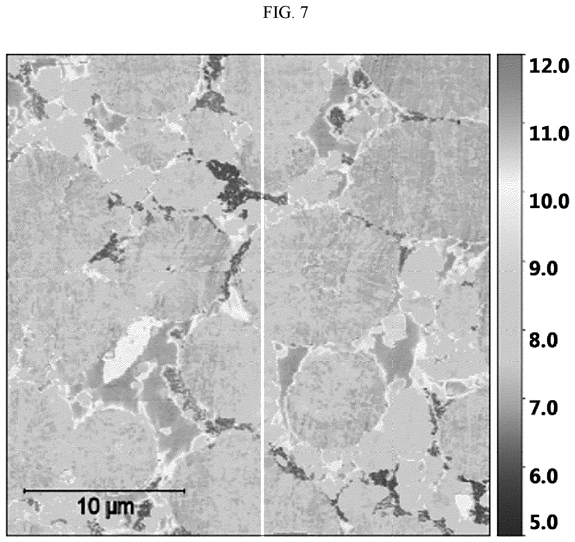

First, lithium nickel cobalt manganese aluminum composite oxide (Li(Ni, Co, Mn, Al)$O_2$), carbon black (specific surface area 1400 m$^2$/g) and polytetrafluoroethylene (PTFE) were introduced to a blender at a ratio of 96.0: 1.5:2.5 and mixed therein at 10,000 rpm for 1 minute to prepare a mixture. Next, a kneader was stabilized at a temperature of 150°C, and the resultant mixture was introduced to the kneader and kneaded therein under a pressure of 1.1 atm to obtain mixture lumps. In Examples 2-4, the kneading rate was controlled differently within a range of 40-70 rpm, and the kneading time was controlled differently within a range of 3-7 minutes. The mixture lumps were introduced to a blender, pulverized therein at 10,000 rpm for 40 seconds and classified by using a sieve having pores of 1 mm to obtain a mixed powder for an electrode. The mixed powder for an electrode was introduced to a first lab calender (roll diameter: 88 mm, roll temperature: 100°C, 20 rpm) to carry out compression, thereby providing a dry electrode film. Then, the resultant dry electrode film was disposed on both surfaces of aluminum foil (thickness 19 $\mu$m) and laminated through a lamination process while maintaining the temperature at 150°C to obtain an electrode. The electrode active material layer on one surface of the resultant electrode had a thickness of about 80 $\mu$m. Meanwhile, the lithium nickel cobalt manganese aluminum composite oxide has a bimodal distribution and includes discrete particles having a diameter of larger particles (secondary particles) about 10 $\mu$m and a diameter of smaller particles of about 5 $\mu$m. In Examples 2-4, different types of conductive materials were used. FIG. 1a and FIG. 1b illustrate the SSRM image of Example 4 and the image observed after masking the conductive material zone thereof. FIG. 5 illustrates the SSRM image of Example 2, and FIG. 6 illustrates the image observed after masking the conductive material zone thereof. FIG. 7 illustrates the SSRM image of Example 3, and FIG. 8 illustrates the image observed after masking the conductive material zone thereof.

**Examples 5 and 6**

First, lithium nickel cobalt manganese aluminum composite oxide (Li(Ni, Co, Mn, Al)$O_2$), carbon black (specific surface area 1400 m$^2$/g) and polytetrafluoroethylene (PTFE) were introduced to a blender and mixed therein at 10,000 rpm for 1 minute to prepare a mixture. Next, a kneader was stabilized at a temperature of 150°C, and the resultant mixture was introduced to the kneader and kneaded therein under a pressure of 1.1 atm to obtain mixture lumps. In Examples 5 and 6, the kneading rate was controlled differently within a range of 40-70 rpm, and the kneading time was controlled differently within a range of 3-7 minutes. The mixture lumps were introduced to a blender, pulverized therein at 10,000 rpm for 40 seconds and classified by using a sieve having pores of 1 mm to obtain a mixed powder for an electrode. The mixed powder for an electrode was introduced to a first lab calender (roll diameter: 88 mm, roll temperature: 100°C, 20 rpm) to carry out compression, thereby providing a dry electrode film. Then, the resultant dry electrode film was disposed on both surfaces of aluminum foil (thickness 19 $\mu$m) and laminated through a lamination process while maintaining the temperature at 150°C to obtain an electrode. The electrode active material layer on one surface of the resultant electrode had a thickness of about 80 $\mu$m. Meanwhile, the lithium nickel cobalt manganese aluminum composite oxide has a bimodal distribution and includes discrete particles having a diameter of larger particles (secondary particles) about 10 $\mu$m and a diameter of smaller particles of about 5 $\mu$m. In Examples 5 and 6, lithium nickel cobalt manganese aluminum composite oxide (Li(Ni, Co, Mn, Al)$O_2$), carbon black (specific surface area 1400 m$^2$/g) and polytetrafluoroethylene (PTFE) were used at a ratio of 96.0:1.8:2.2 and 96.2:1.6:2.2, respectively. FIG. 13 illustrates the SSRM image of Example 5 and the image observed after masking the conductive material zone thereof. FIG. 14 illustrates the SSRM image of Example 6 and the image observed after masking the conductive material zone thereof.

**Preparation of Sample of Electrode Cross-Section**

A solution containing an epoxy-based polymer having a weight average molecular weight of about 700 g/mol as an epoxy group-containing polymer was prepared.

The positive electrode prepared according to each of Examples 1-6 was impregnated with the epoxy-based polymer solution prepared as described above so that the pores may be filled with the polymer. Then, an ion milling system (IB19520CCP, available from Jeol) for irradiating argon ion beams was used to irradiate focused argon (Ar) ion beams to the positive electrode for a secondary battery to cut off the surface thereof, thereby preparing a sample of cross-section having a clear cross-section. Upon the irradiation of argon ion beams, the ion beam current was set to 170 $\mu$A, the gas flow was set to 1.5 cm$^3$/min, and the irradiation was carried out for 3 hours.

**SSRM Analysis Conditions**

System used for analysis: Cypher ES (Oxford Instrument), Dual-gain ORCA cantilever holder

[Parameters]

Mode: contact
Sample/line: 512x512, Scan rate: 0.5 Hz
Bias: ~2 V, Deflection Setpoint Volts: ~0.2
Scan Angle: 90°

[AFM Mode]

Model: AD-40-As (available from Adama)
Tip: Highly doped (B) single crystal diamond, tip height 300 nm
Cantilever & bulk tip: diamond coated silicon, Reflex coating (Au)
F = 180 kHz, k = 40N/m
Typical contact resistance: ~10 k$\Omega$

**SSRM Analysis Method**

After carrying out the ion milling, the sample was transferred to a glove box, while not being exposed to the atmosphere, and loaded to an AFM puck. Then, silver (Ag) paste was applied between the portion of electrode other than the cross-section prepared as mentioned above and the AFM puck to form an additional conduction path. After that, the sample having such an additional conduction path was loaded in a closed cell body and mounted to the AFM system, while being maintained in a state non-exposed to the atmosphere. After carrying out laser aligning, the milled portion was selected as a test portion by using an optical microscope and analyzed under Ar flow. In this manner, the SSRM image was obtained. FIG. 3, FIG. 5, FIG 7, and FIG. 1a illustrate the SSRM images of Example 1, Example 2, Example 3, and Example 4, respectively. In addition, the images shown at the top of FIG. 13 and FIG. 14 illustrate the SSRM images of the electrodes according to Example 5 and Example 6, respectively. The observed images had a size of 30 μm x 30 μm.

**Conductive Material Zone Masking**

The SSRM images obtained as described above were subjected to conductive material zone masking by using Gwyddion software.
First, a log(resistance) image was acquired, and the histogram of the log(resistance) distribution in the image was acquired. This was carried out by using Height distribution function in Calculate 1D Statistical function provided by the software. A threshold was defined by carrying out correction of adding 0.2 to the log(R/Ω) value corresponding to the minimum value between the peak corresponding to the conductive material and the peak corresponding to the electrode active material. FIG. 2 illustrates the histogram of Electrode 3, wherein the threshold was set to log(R/Ω) =7.2. Based on this, the conductive material zone was masked. Herein, Grain filtering function was used to delete the zone corresponding to pixels smaller than 3 pixel, and the zone disposed in the electrode active material was deleted. It can be seen from FIG. 2 that the pixel corresponding to the electrode active material and the pixel corresponding to the conductive material are differentiated from each other on the histogram acquired from the log scale image. In other words, it can be seen that information of each pixel determined in terms of the zone corresponding thereto can be used to quantify the distribution of the conductive material zone with ease.
In addition, FIG. 1b illustrates only the masked conductive material zone by using light and shade of color, after masking the conductive material zone, in the SSRM image of the electrode according to Example 4, FIG. 4 illustrates the same in the SSRM image (FIG. 3) of the electrode according to Example 1, FIG. 6 illustrates the same in the SSRM image (FIG. 5) of the electrode according to Example 2, and FIG. 8 illustrates the same in the SSRM image (FIG. 7) of the electrode according to Example 3. In addition, the images shown at the bottom of FIG. 13 and FIG. 14 illustrate only the masked conductive material zones by using light and shade of color in the electrodes according to Example 5 and Example 6, respectively.
Then, Grain-Summary function was used to determine the circumference and area of the masked zone.
After that, each value was input to the above Formula 1 and Formula 2 to calculate Index 1 and Index 2. The results are shown in the following Table 1. As shown in Table 1, different values of Index 1 and Index 2 are calculated depending on the type and/or content of the conductive material in the electrode active material layer and the electrode manufacturing process. In this manner, it is possible to quantitatively determine the dispersibility of the conductive material in the electrode. Therefore, the conductive material dispersibility index according to the present disclosure can be used to quantitatively determine the dispersibility of the conductive material in an electrode. In addition, when manufacturing an electrode, the conductive material dispersibility index may be used for selecting the content and/or type of a conductive material, selecting the method for manufacturing an electrode, and setting the processing condition of manufacturing an electrode.

[Table 1]

|  | Type of conductive material | Area of conductive material zone (μm²) | Ratio of conductive material zone based on total area (%) | Circumference of conductive material zone (μm) | Index 1 (μm⁻¹) | Index 2 |
|---|---|---|---|---|---|---|
| Ex. 1 | Carbon black (A) | 125.6 | 14.0 | 342.6 | 2.7 | 8.6 |
| Ex. 2 | Carbon black (A) | 111.4 | 12.3 | 526.0 | 4.7 | 14.1 |
| Ex. 3 | Carbon black (B) | 47.0 | 5.2 | 380.9 | 8.1 | 15.7 |
| Ex. 4 | Carbon black (B) | 50.9 | 5.6 | 482.7 | 9.5 | 19.1 |

(continued)

| | Type of conductive material | Area of conductive material zone ($\mu m^2$) | Ratio of conductive material zone based on total area (%) | Circumference of conductive material zone ($\mu m$) | Index 1 ($\mu m^{-1}$) | Index 2 |
|---|---|---|---|---|---|---|
| Ex. 5 | Carbon black (A) | 48.0 | 5.3 | 312 | 6.5 | 12.7 |
| Ex. 6 | Carbon black (A) | 34.2 | 3.8 | 346.8 | 10.1 | 16.7 |

[Description of Main Drawing Numerals]

10: Electrode, 11: Electrode active material layer, 11s: Portion to predetermined depth from surface, 11f: Portion to predetermined height from portion facing current collector, 12: Current collector

## Claims

1. A method for evaluating the dispersibility of a conductive material in an electrode for an electrochemical device comprising an electrode active material layer containing an electrode active material and the conductive material, based on a mathematical formula defined by the parameters of the circumference ($Boundary_{measured}$) and area (A) of a portion defined as a conductive material zone in at least one predetermined cross-section inside of the electrode active material layer,

   wherein the mathematical formula is conductive material dispersibility index 1 (Index 1) represented by the following Formula 1 or conductive material dispersibility index 2 (Index 2) represented by the following Formula 2:

$$[Formula\ 1]$$

$$Index\ 1\ (\mu m^{-1}) = Boundary_{measured}/A$$

$$[Formula\ 2]$$

$$Index\ 2 = Boundary_{measured}/L_{circle}$$

   wherein $Boundary_{measured}$ in Formula 1 represents the circumference of a portion determined in a predetermined cross-section of the electrode active material layer and defined as a conductive material zone, A in Formula 1 represents the area of a portion determined in a predetermined cross-section of the electrode active material layer and defined as a conductive material zone, $Boundary_{measured}$ in Formula 2 is the same as defined above with reference to Formula 1, and $L_{circle}$ in Formula 2 represents the circumference ( $2 \times \sqrt{\pi A}$ ) of a circle having the same area as the above-defined conductive material zone, and
   wherein the method comprises the steps of:

   (Step 1) preparing a sample of cross-section in which a predetermined cross-section inside of the electrode active material layer is exposed;
   (Step 2) acquiring a 2D-scale map about the resistance distribution of the sample of cross-section;
   (Step 3) masking a conductive material zone; and
   (Step 4) calculating the circumference and area of the masked zone, inputting the calculated values to Formula 1 and/or Formula 2, and determining the conductive material dispersibility of the electrode active material layer.

2. The method for evaluating the dispersibility of a conductive material according to claim 1, wherein the electrode active material layer is formed on any one surface of an electrode current collector, and the cross-section(s) is a surface parallel with or perpendicular to the portion where the electrode active material layer faces the current collector.

3. The method for evaluating the dispersibility of a conductive material according to claim 1, wherein the sample of cross-section is prepared by etching the electrode surface to a predetermined depth by ion milling.

4. The method for evaluating the dispersibility of a conductive material according to claim 1, wherein the step of acquiring a 2D-scale map about the resistance distribution of the sample of cross-section is carried out by scanning spreading resistance microscopy (SSRM) which comprises scanning the surface of the sample of cross-section using an atomic force microscopy (AFM) instrument.

5. The method for evaluating the dispersibility of a conductive material according to claim 1, wherein the step of masking a conductive material zone comprises:

   processing and modifying the resistance value data obtained from Step 2 into a log scale to obtain a log-scale image (log(resistance) image);
   extracting a log resistance distribution histogram, wherein the ingredients forming the sample of electrode cross-section are indicated in division from the log-scale image; and
   taking a $\log(R/\Omega)$ value corresponding to the minimum value between the conductive material peak and the electrode active material peak in the histogram as a threshold, and masking a zone having a value smaller than the threshold as a conductive material zone.

6. The method for evaluating the dispersibility of a conductive material according to claim 5, further comprising:
   a step of correcting the threshold by adding a value of 0.1-0.5 to the minimum value.

7. The method for evaluating the dispersibility of a conductive material according to claim 1, wherein the electrode comprises a current collector and an electrode active material layer formed on at least one surface of the current collector, and the electrode active material layer comprises an electrode active material, a conductive material and a binder.

8. The method for evaluating the dispersibility of a conductive material according to claim 1, wherein the cross-section is parallel with or perpendicular to the portion where the electrode active material layer faces the current collector.

**Patentansprüche**

1. Verfahren zum Bewerten der Dispergierbarkeit eines leitfähigen Materials in einer Elektrode für eine elektrochemische Vorrichtung, umfassend eine Elektrodenaktivmaterialschicht, die ein Elektrodenaktivmaterial und das leitfähige Material enthält, basierend auf einer mathematischen Formel, die durch die Parameter des Umfangs (Boundary$_{measured}$) und der Fläche (A) eines Abschnitts definiert ist, der als eine leitfähige Materialzone in mindestens einem vorbestimmten Querschnitt innerhalb der Elektrodenaktivmaterialschicht definiert ist,

   wobei die mathematische Formel der Dispergierbarkeitsindex 1 (Index 1) des leitfähigen Materials, dargestellt durch die folgende Formel 1, oder der Dispergierbarkeitsindex 2 (Index 2) des leitfähigen Materials, dargestellt durch die folgende Formel 2, ist:

   [Formel 1]

   $$\text{Index } 1 \ (\mu m^{-1}) = \text{Boundary}_{measured}/A$$

   [Formel 2]

   $$\text{Index } 2 = \text{Boundary}_{measured}/L_{circle}$$

   wobei Boundary$_{measured}$ in Formel 1 den Umfang eines Abschnitts darstellt, der in einem vorbestimmten Querschnitt der Elektrodenaktivmaterialschicht bestimmt und als eine leitfähige Materialzone definiert ist, A in Formel 1 die Fläche eines Abschnitts darstellt, der in einem vorbestimmten Querschnitt der Elektrodenaktivmaterialschicht bestimmt und als eine leitfähige Materialzone definiert ist, Boundary$_{measured}$ in Formel 2 die gleiche ist wie oben unter Bezugnahme auf Formel 1 definiert, und L$_{circle}$ in Formel 2 den Umfang ( $2 \times \sqrt{\pi A}$ )

eines Kreises darstellt, der die gleiche Fläche wie die oben definierte leitfähige Materialzone aufweist, und wobei das Verfahren die folgenden Schritte umfasst:

(Schritt 1) Vorbereiten einer Probe mit einem Querschnitt, in dem ein vorbestimmter Querschnitt innerhalb der Elektrodenaktivmaterialschicht freigelegt ist;
(Schritt 2) Erfassen einer 2D-Skalenkarte über die Widerstandsverteilung der Probe mit einem Querschnitt;
(Schritt 3) Maskieren einer leitfähigen Materialzone; und
(Schritt 4) Berechnen des Umfangs und der Fläche der maskierten Zone, Eingeben der berechneten Werte in Formel 1 und/oder Formel 2 und Bestimmen der Dispergierbarkeit des leitfähigen Materials der Elektrodenaktivmaterialschicht.

2. Verfahren zum Bewerten der Dispergierbarkeit eines leitfähigen Materials nach Anspruch 1, wobei die Elektrodenaktivmaterialschicht auf einer beliebigen Oberfläche eines Elektrodenstromabnehmers gebildet ist und der Querschnitt bzw. die Querschnitte eine Oberfläche parallel zu oder senkrecht zu dem Abschnitt ist bzw. sind, wo die Elektrodenaktivmaterialschicht dem Stromabnehmer zugewandt ist.

3. Verfahren zum Bewerten der Dispergierbarkeit eines leitfähigen Materials nach Anspruch 1, wobei die Probe mit einem Querschnitt durch Ätzen der Elektrodenoberfläche auf eine vorbestimmte Tiefe durch Ionenfräsen vorbereitet wird.

4. Verfahren zum Bewerten der Dispergierbarkeit eines leitfähigen Materials nach Anspruch 1, wobei der Schritt des Erfassens einer 2D-Skalenkarte über die Widerstandsverteilung der Probe mit einem Querschnitt durch Rasterstreuwiderstandsmikroskopie (SSRM) durchgeführt wird, die das Abtasten der Oberfläche der Probe mit einem Querschnitt unter Verwendung eines Instruments für Atomkraftmikroskopie (AFM) umfasst.

5. Verfahren zum Bewerten der Dispergierbarkeit eines leitfähigen Materials nach Anspruch 1, wobei der Schritt des Maskierens einer leitfähigen Materialzone umfasst:

Verarbeiten und Modifizieren der aus Schritt 2 erhaltenen Widerstandswertdaten in eine logarithmische Skala, um ein logarithmisches Skalenbild (log(Widerstand)-Bild) zu erhalten;
Extrahieren eines logarithmischen Widerstandsverteilungshistogramms, wobei die Bestandteile, die die Probe mit einem Elektrodenquerschnitt bilden, in Teilung aus dem logarithmischen Skalenbild angegeben sind; und
Nehmen eines $\log(R/\Omega)$-Werts, der dem Minimalwert zwischen der Spitze des leitfähigen Materials und der Spitze des Elektrodenaktivmaterials in dem Histogramm entspricht, als einen Schwellenwert und Maskieren einer Zone mit einem Wert, der kleiner als der Schwellenwert ist, als eine leitfähige Materialzone.

6. Verfahren zum Bewerten der Dispergierbarkeit eines leitfähigen Materials nach Anspruch 5, ferner umfassend: einen Schritt des Korrigierens des Schwellenwerts durch Addieren eines Werts von 0,1-0,5 zu dem Minimalwert.

7. Verfahren zum Bewerten der Dispergierbarkeit eines leitfähigen Materials nach Anspruch 1, wobei die Elektrode einen Stromabnehmer und eine Elektrodenaktivmaterialschicht umfasst, die auf mindestens einer Oberfläche des Stromabnehmers gebildet ist, und die Elektrodenaktivmaterialschicht ein Elektrodenaktivmaterial, ein leitfähiges Material und ein Bindemittel umfasst.

8. Verfahren zum Bewerten der Dispergierbarkeit eines leitfähigen Materials nach Anspruch 1, wobei der Querschnitt parallel zu oder senkrecht zu dem Abschnitt ist, wo die Elektrodenaktivmaterialschicht dem Stromabnehmer zugewandt ist.

## Revendications

1. Procédé d'évaluation de la dispersibilité d'un matériau conducteur dans une électrode pour un dispositif électrochimique comprenant une couche de matériau actif d'électrode contenant un matériau actif d'électrode et le matériau conducteur, sur la base d'une formule mathématique définie par les paramètres de la circonférence (Limite$_{mesurée}$) et l'aire (A) d'une partie définie être une zone de matériau conducteur dans au moins une section transversale prédéterminée à l'intérieur de la couche de matériau actif d'électrode,

dans lequel la formule mathématique est un indice de dispersibilité de matériau conducteur 1 (Indice 1) représenté par la Formule 1 ci-après ou un indice de dispersibilité de matériau conducteur 2 (Indice 2) représenté par la Formule 2 ci-après :

[Formule 1]

$$\text{Indice 1 } (\mu m^{-1}) = \text{Limite}_{\text{mesurée}}/A$$

[Formule 2]

$$\text{Indice 2} = \text{Limite}_{\text{mesurée}}/L_{\text{cercle}}$$

dans lequel Limite$_{\text{mesurée}}$ dans la Formule 1 représente la circonférence d'une partie déterminée dans une section transversale prédéterminée de la couche de matériau actif d'électrode et définie être une zone de matériau conducteur, A dans la Formule 1 représente l'aire d'une partie déterminée dans une section transversale prédéterminée de la couche de matériau actif d'électrode et définie être une zone de matériau conducteur, Limite$_{\text{mesurée}}$ dans la Formule 2 est la même que définie ci-dessus en référence à la Formule 1, et L$_{\text{cercle}}$ dans la Formule 2 représente la circonférence ( $2 \times \sqrt{\pi A}$ ) d'un cercle ayant la même aire que la zone de matériau conducteur définie ci-dessus, et
dans lequel le procédé comprend les étapes consistant à :

(Étape 1) préparer un échantillon de section transversale dans lequel une section transversale prédéterminée à l'intérieur de la couche de matériau actif d'électrode est exposée ;
(Étape 2) acquérir une carte à l'échelle en 2D concernant la répartition de résistance de l'échantillon de section transversale ;
(Étape 3) masquer une zone de matériau conducteur ; et
(Étape 4) calculer la circonférence et l'aire de la zone masquée, entrer les valeurs calculées à la Formule 1 et/ou la Formule 2, et déterminer la dispersibilité du matériau conducteur de la couche de matériau actif d'électrode.

2. Procédé d'évaluation de la dispersibilité d'un matériau conducteur selon la revendication 1, dans lequel la couche de matériau actif d'électrode est formée sur l'une des surfaces d'un collecteur de courant d'électrode, et la ou les section(s) transversale(s) sont une surface parallèle ou perpendiculaire à la partie où la couche de matériau actif d'électrode est face au collecteur de courant.

3. Procédé d'évaluation de la dispersibilité d'un matériau conducteur selon la revendication 1, dans lequel l'échantillon de section transversale est préparé par gravure de la surface d'électrode à une profondeur prédéterminée par gravure ionique.

4. Procédé d'évaluation de la dispersibilité d'un matériau conducteur selon la revendication 1, dans lequel l'étape d'acquisition d'une carte à l'échelle en 2D concernant la répartition de résistance de l'échantillon de section transversale est effectuée par microscopie de résistance d'étalement (SSRM) qui consiste à balayer la surface de l'échantillon de section transversale en utilisant un instrument de microscopie à force atomique (AFM).

5. Procédé d'évaluation de la dispersibilité d'un matériau conducteur selon la revendication 1, dans lequel l'étape de masquage d'une zone de matériau conducteur consiste à :

traiter et modifier les données de valeur de résistance obtenues à l'Étape 2 dans une échelle logarithmique pour obtenir une image à échelle logarithmique (image (résistance) logarithmique) ;
extraire un histogramme de répartition de résistance logarithmique, dans lequel les ingrédients formant l'échantillon de section transversale de l'électrode sont indiqués dans une division de l'image à échelle logarithmique ; et
prendre une valeur log($R/\Omega$) correspondant à la valeur minimum entre le pic de matériau conducteur et le pic de matériau actif d'électrode dans l'histogramme qui est un seuil, et masquer une zone ayant une valeur inférieure au seuil qui est une zone de matériau conducteur.

6. Procédé d'évaluation de la dispersibilité d'un matériau conducteur selon la revendication 5, comprenant en outre : une étape de correction du seuil par l'ajout d'une valeur de 0,1 à 0,5 à la valeur minimum.

7. Procédé d'évaluation de la dispersibilité d'un matériau conducteur selon la revendication 1, dans lequel l'électrode comprend un collecteur de courant et une couche de matériau actif d'électrode formée sur au moins une surface du collecteur de courant, et la couche de matériau actif d'électrode comprend un matériau actif d'électrode, un matériau conducteur et un liant.

8. Procédé d'évaluation de la dispersibilité d'un matériau conducteur selon la revendication 1, dans lequel la section transversale est parallèle ou perpendiculaire à la partie où la couche de matériau actif d'électrode est face au collecteur de courant.

FIG. 1a

FIG. 1b

FIG. 2

FIG. 3

FIG. 4

FIG. 5

10 µm

12.0

11.0

10.0

9.0

8.0

7.0

6.0

5.0

FIG. 6

FIG. 7

FIG. 8

FIG. 9a

<u>10</u>

FIG. 9b

<u>10</u>

FIG. 10

EP 4 443 170 B1

FIG. 11

30

FIG. 12

FIG. 13

FIG. 14

FIG. 15

**Grain Summary** ✕

| | |
|---|---|
| Number of grains: | 228 |
| Density: | $0.2523\ \mu m^{-2}$ |
| Total projected area (abs.): | $50.92\ \mu m^2$ |
| Total projected area (rel.): | 5.636 % |
| Mean grain area: | $0.2234\ \mu m^2$ |
| Mean grain size: | 322.8 nm |
| Total grain volume (zero): | $342.1\ \mu m^2$ |
| Total grain volume (minimum): | $27.58\ \mu m^2$ |
| Total grain volume (Laplace): | $-47.60\ \mu m^2$ |
| Total projected boundary length: | 482.7 μm |

Help  OK

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020220049197
- US 20200075937 A1
- KR 1020220046201 A
- KR 1020130064288 A
- JP 2002034325 A
- JP 2018523281 A
- JP 2018137225 A